# EUROPEAN PATENT APPLICATION

(11) **EP 1 383 325 A2**
(43) Date of publication of application: **21.01.2004**
(21) Application number: 03010813.8
(22) Date of filing: 14.05.2003
(51) Int. Cl.: H04N 7/16

(54) **Aggregated EPG manager**

(30) Priority: 27.06.2002 US 184736
(71) Applicant: MICROSOFT CORPORATION, Redmond, Washington 98052-6399 (US)
(72) Inventor: Fries, Robert, M., Kirkland, Washington 98008 (US); Bishop, Alan, G., Campbell, California 95008 (US); Wray, Jonathan, A., Redmond, Washington 98052 (US)
(74) Representative: Grünecker, Kinkeldey, Stockmair & Schwanhäusser Anwaltssozietät

(57) **Abstract**

Described herein is a technology for electronic program guides and multimedia presentation devices. One implementation, described herein, provides a unified access to multiple electronic program guides (EPGs) from multiple programming and guide data sources (e.g., local broadcast, satellite broadcast, DVR, VoD, etc.). With this implementation, multiple EPGs from a variety of sources are presented in a single common user interface (UI). Therefore, the television viewer may search/browse the EPG of all sources concurrently. The scope of the exemplary e-commerce facilitation is pointed out in the appending claims.

## Description

### TECHNICAL FIELD

This invention is generally related to technology for electronic program guides and multimedia presentation devices.

### BACKGROUND

Before reaching a television set, multimedia broadcast signals are now commonly received and possibly processed by devices containing a microprocessor. Such devices include cable television set-top boxes, digital satellite television receivers, personal video recorders, and personal computers equipped with broadcast receiver hardware. They are commonly referred to as Integrated Receiver/Decoders (IRD) devices.

### Multiple Sources

An IRD device typically receives a broadcast signal from a broadcast source. Examples of such sources include a cable television broadcaster, a local television broadcaster, a satellite television broadcaster, and a Video-on-Demand (VoD) provider. Frequently, an IRD device receives broadcast signals from multiple broadcast sources.

An IRD device sometimes receives signals (sometimes even broadcast signals) from other sources, such as the Internet communications, intranet communications, data storage devices (e.g., DVD), and directly connected devices.

### Electronic Program Guides

The IRD devices often enhance a television viewer's experience by employing one or more Electronic Program Guides (EPGs). With an EPG, television viewers navigate through an onscreen program guide to locate programming. Typically viewers browse the guide or query it.

With a guide, viewers browse currently available programming and schedules of programming available in the future. By using keywords or categories, viewers typically search the guide for programming. With an EPG, the viewers may also set reminders for upcoming programs or enter instructions to record one or more shows.

### Multiple EPGs

Typically, each broadcast source (e.g., VoD provider; cable TV broadcaster, and satellite TV broadcaster) provide their own proprietary EPG. Sometimes, these broadcasters offer enhanced proprietary EPGs as a value-added service. Other sources (e.g., web pages and email) may offer an enhanced proprietary EPG. Furthermore, an IRD device may provide an EPG from data supplied from multimedia storage mediums (such as DVD or hard drives).

With conventional approaches, a viewer must browse (or search) each EPG separately. No universal EPG exists.

The following is an example scenario using the conventional approach:

An IRD device has multiple broadcast sources and each has their associated EPGs. It receives a digital cable broadcast and it receives a VoD service. It is also a personal TV recorder and has a collection of programming locally recorded. The IRD device also receives an EPG for local television channels via the Internet.

Suppose a viewer has a particular interest in programming related to "cats." To find what is available, the viewer must separately query the EPGs for the cable broadcast, the VoD service, the local TV broadcast, and the locally recorded programming. In this scenario, the viewer had to perform at least four separate searches to find available programming on the subject of "cats."

### SUMMARY

Described herein is a technology for electronic program guides and multimedia presentation devices.

One implementation, described herein, provides a unified access to multiple electronic program guides (EPGs) from multiple programming and guide data sources (e.g., local broadcast, satellite broadcast, DVR, VoD, etc.). With this implementation, multiple EPGs from a variety of sources are presented in a single common user interface (UI). Therefore, the television viewer may search/browse the EPG of all sources concurrently.

This summary itself is not intended to limit the scope of this patent. Moreover, the title of this patent is not intended to limit the scope of this patent. For a better understanding of the exemplary e-commerce facilitation, please see the following detailed description and appending claims, taken in conjunction with the accompanying drawings. The scope of the exemplary e-commerce facilitation is pointed out in the appending claims.

### BRIEF DESCRIPTION OF THE DRAWINGS

The same numbers are used throughout the drawings to reference like elements and features.

Fig. 1 illustrates an exemplary environment in which an implementation described herein may be employed.

Fig. 2 illustrates of an example presentation device, a television, and various input devices that interact with the presentation device.

Fig. 3 is a block diagram that illustrates components of the example presentation device(s) shown in Figs. 1 and 2.

Fig. 4 illustrates an exemplary environment in which an implementation described herein may be employed and it includes components shown in Figs. 1 and 2.

Fig. 5 illustrates an exemplary environment in which an implementation described here may be employed and it includes components shown in Figs. 1 and 2.

Fig. 6 is a flow diagram showing a methodological implementation described herein.

### DETAILED DESCRIPTION

In the following description, for purposes of explanation, specific numbers, materials and configurations are set forth in order to provide a thorough understanding of the exemplary e-commerce facilitation. However, it will be apparent to one skilled in the art that the exemplary e-commerce facilitation may be practiced without the specific exemplary details. In other instances, well-known features are omitted or simplified to clarify the description of the exemplary implementations of exemplary e-commerce facilitation, thereby better explain the exemplary e-commerce facilitation. Furthermore, for ease of understanding, certain method steps are delineated as separate steps; however, these separately delineated steps should not be construed as necessarily order dependent in their performance.

The following description sets forth one or more exemplary implementations of an Aggregated EPG Manager that incorporate elements recited in the appended claims. These implementations are described with specificity in order to meet statutory written description, enablement, and best-mode requirements. However, the description itself is not intended to limit the scope of this patent.

The inventors intend these exemplary implementations to be examples. The inventors do not intend these exemplary implementations to limit the scope of the claimed exemplary e-commerce facilitation. Rather, the inventors have contemplated that the claimed exemplary e-commerce facilitation might also be embodied and implemented in other ways, in conjunction with other present or future technologies.

An example of an embodiment of an Aggregated EPG Manager may be referred to as an "exemplary EPG manager."

### Introduction

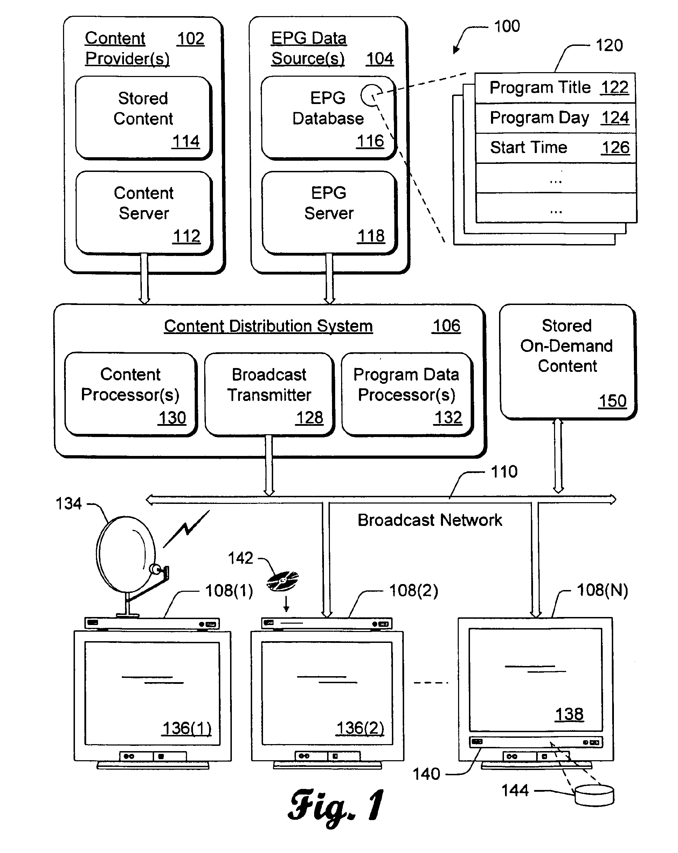

The exemplary EPG manager may be implemented (partially or wholly) on systems, devices, and/or communications networks like that shown in Figs. 1 through 5.

Most conventional systems have one monolithic EPG application. Short of replacing the monolithic EPG application, there is no way to change the functionality of the browsing/query of program data. Short of changing the monolithic EPG application, one cannot add new EPG data sources.

The exemplary EPG manager provides a unified access to multiple EPGs from multiple programming and guide data sources. With it, multiple EPGs from a variety of sources are presented in a single common user interface (UI).

A television viewer does not want to search/browse each source (e.g., local broadcast, satellite broadcast, DVR, VoD, etc.) separately. Rather, they want to search/browse all of them together.

To solve those issues, the exemplary EPG manager aggregates the EPG listings from multiple sources together for browsing and searching by the TV viewer. In one implementation, this is accomplished by employing standardized APIs (application programming interfaces) to convey program data.

With the exemplary EPG manager, it is easier to switch EPG suppliers. It is also easier to change the mechanism of EPG data communication to a presentation device. Here "easier" means easier than the current solution to these issues which is to alter the monolithic EPG applications of the presentation devices. That may require a wholesale and global update to thousands or millions of devices in homes, businesses, warehouses, and stores.

In addition to aggregating the program data for purposes of display to a user, the exemplary EPG manager has other applications. Since the aggregated data may be returned through an API, there are many other uses for the data. For example, a programmable recorder may automatically select and record programming that a user is expected to like based upon the retrieved program data, knowledge of the user's tastes, and a set of heuristics.

### EPG Providers

Herein, the term "EPG provider" is used generically to refer to two distinct sources of EPG program data: Local and Remote.

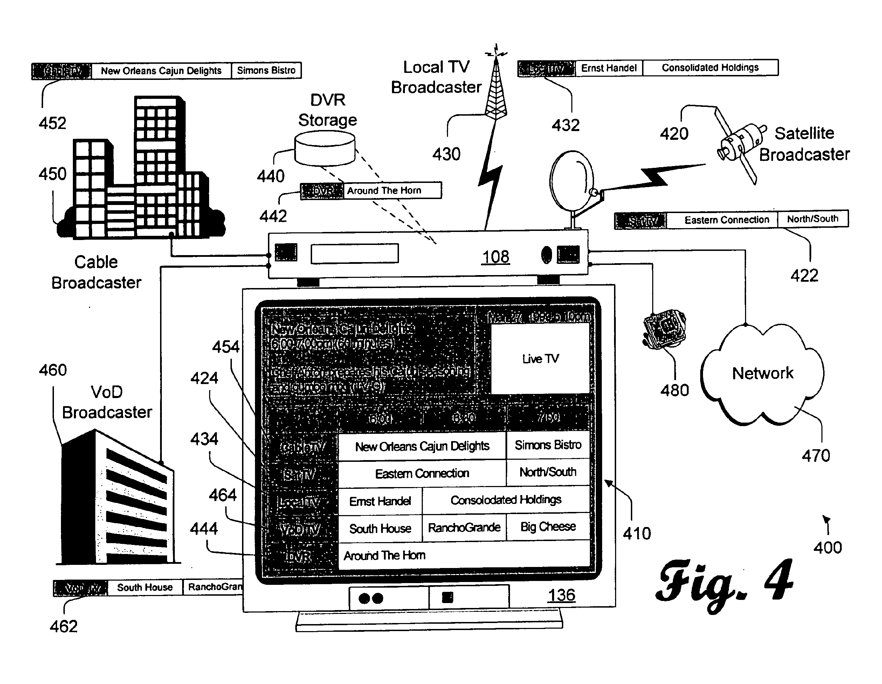

A "remote" EPG provider is a data source that is typically remote or "outside" of the immediate environment of the Integrated Receiver/Decoders (IRD) device. Examples include a broadcaster, a VoD server, the Internet, etc. These may also be generally called "EPG sources." Examples of remote EPG providers illustrated herein include EPG data source(s) 104 of Fig. 1 and sources 420, 430, 440, 450, 460, 470, and 480 of Fig. 4.

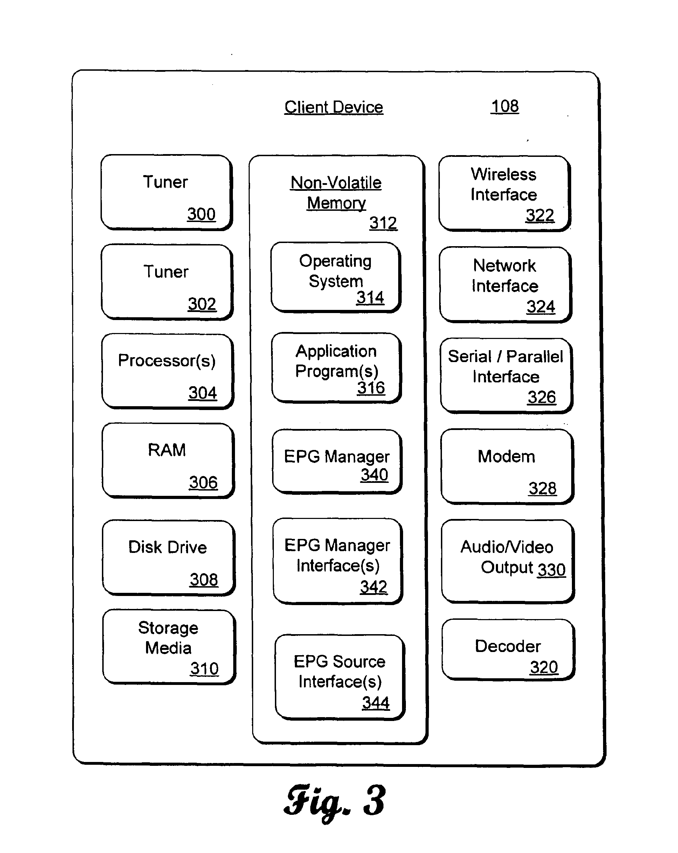

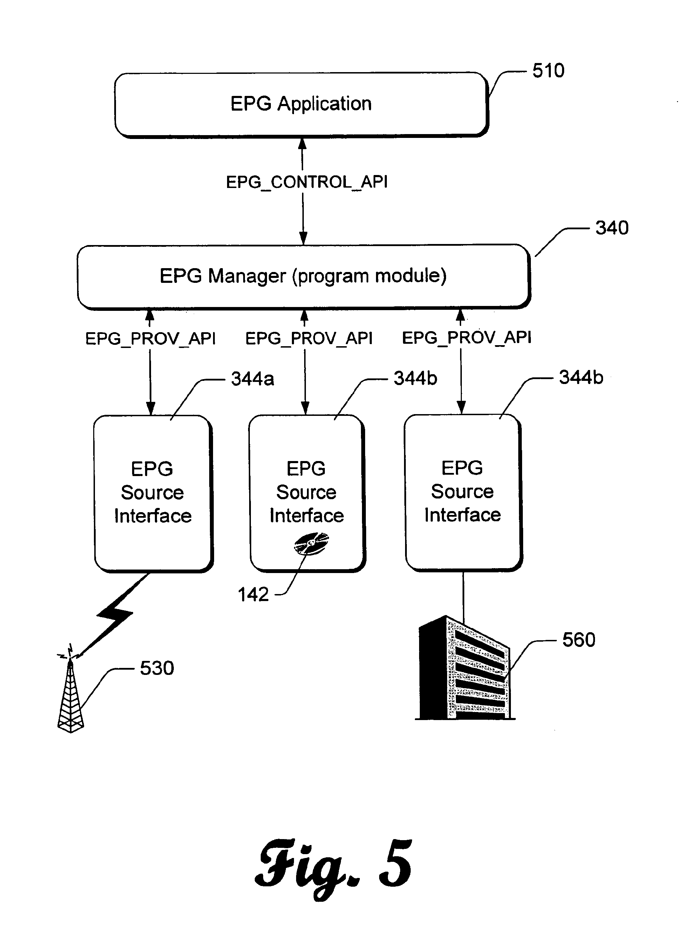

A "local" EPG provider is one or more software or hardware components of the IRD device. Typically, it is an application programming interface (API) configured to communicate with one or more "remote" EPG providers (i.e., EPG sources). These may also be generally called "EPG source interfaces." Examples of local EPG providers illustrated herein include EPG source interface(s) 344 of Fig. 3 and interfaces 344a-c of Fig. 5.

Unless the context indicates one or the other, assume that references to an EPG provider herein contemplate both varieties of either the "local" or "remote" EPG providers.

### Exemplary Environment

**Fig. 1** illustrates an exemplary environment 100 in which the techniques, systems, and other aspects described herein may be implemented (partially or wholly). Exemplary environment 100 is a television entertainment system that facilitates distribution of multi-media. A typical digital video broadcast (DVB) network is an example of such an environment.

Multimedia services are available in a variety of forms. The multimedia service might be broadcast content or "broadcast feed" which may include video information as in a television broadcast, audio-only information as in a radio broadcast, or Internet data as in an Internet multicast. Multimedia services may also include access to resources on a network such as a file stored on the network. This resource might be, for example, a Web page or other file remotely stored on a Local Area Network (LAN) or on a Wide Area Network (WAN) such as the Internet.

The environment 100 includes one or more multimedia content providers 102, a content distribution system 106, and one or more presentation devices 108(1), 108(2), ..., 108(N) coupled to the content distribution system 106 via a broadcast network 110. An example of these presentation devices are Integrated Receiver/Decoders (IRD) devices.

Multimedia content provider 102 includes a content server 112 and stored content 114, such as movies, television programs, commercials, music, and similar audio and/or video content. One or more of the multimedia content providers may be a premium service provider (PS provider).

Content server 112 controls distribution of the stored content 114 from content provider 102 to the content distribution system 106. Additionally, content server 102 controls distribution of live content (e.g., content that was not previously stored, such as live feeds) and/or content stored at other locations to the content distribution system 106.

A remote Electronic Program Guide (EPG) data source 104 includes an EPG database 116 and an EPG server 118. The EPG database 116 stores electronic files of program data 120 which is used to generate an electronic program guide (or, "program guide"). Program data includes program titles, ratings, characters, descriptions, actor names, station identifiers, channel identifiers, schedule information, and so on. The terms "program data" and "EPG data" are used interchangeably herein.

For discussion purposes, an electronic file maintains program data 120 that may include a program title 122, a program day or days 124 to identify which days of the week the program will be shown, and a start time or times 126 to identify the time that the program will be shown on the particular day or days of the week.

The EPG server 118 processes the EPG data prior to distribution to generate a published version of the program data which contains programming information for all channels for one or more days. The processing may involve any number of techniques to reduce, modify, or enhance the EPG data. Such processes might include selection of content, content compression, format modification, and the like.

The EPG server 118 controls distribution of the published version of the program data from program data provider 104 to the content distribution system 106 using, for example, a file transfer protocol (FTP) over a TCP/IP network (e.g., Internet, UNIX, etc.). Further, the published version of the program data can be transmitted from program data provider 102 via a satellite directly to a presentation device 108.

Each of the sources of program data (such as EPG Source 104) may be called generally called an EPG data source (or remote EPG provider). Examples of EPG data sources include (by way of example only and not limitation):
- VoD (Video-on-Demand) providers;
- content stored on non-removable storage medium of a DVR (Digital Video Recorder);
- content stored on removable storage medium of a DVR;
- local television broadcaster;
- cable television broadcaster;
- satellite television broadcaster;
- portable multimedia player (e.g., MP3 player)
- data server over a network (e.g., Internet or intranet)

Content distribution system 106 may be coupled to a network, such as an intranet or the Internet. The content distribution system 106 includes a broadcast transmitter 128, one or more content processors 130, and one or more program data processors 132. Broadcast transmitter 128 broadcasts signals, such as cable television signals, across broadcast network 110.

Broadcast network 110 can include a cable television network, RF, microwave, satellite, and/or data network, such as the Internet, and may also include wired or wireless media using any broadcast format or broadcast protocol. Additionally, broadcast network 110 can be any type of network, using any type of network topology and any network communication protocol, and can be represented or otherwise implemented as a combination of two or more networks.

Content processor 130 processes the content received from content provider 102 prior to transmitting the content across broadcast network 110. Similarly, program data processor 132 processes the program data received from program data provider 104 prior to transmitting the program data across broadcast network 110.

A particular content processor 130 may encode, or otherwise process, the received content into a format that is understood by the multiple presentation devices 108(1), 108(2), ..., 108(N) coupled to broadcast network 110. Although Fig. 1 shows a single content provider 102, a single program data provider 104, and a single content distribution system 106, exemplary environment 100 can include any number of content providers and/or program data providers coupled to any number of content distribution systems.

Content distribution system 106 is representative of a headend service that provides EPG data, as well as content, to multiple subscribers. Each content distribution system 104 may receive a slightly different version of the program data that takes into account different programming preferences and lineups.

The EPG server 118 creates different versions of EPG data (e.g., different versions of a program guide) that include those channels of relevance to respective headend services, and the content distribution system 106 transmits the EPG data to the multiple presentation devices 108(1), 108(2), ..., 108(N). In one implementation, for example, content distribution system 106 utilizes a carousel file system to repeatedly broadcast the EPG data over an out-of-band (OOB) channel to the presentation devices 108.

Presentation devices 108 can be implemented in a number of ways. For example, a presentation device 108(1) receives broadcast content from a satellite-based transmitter via a satellite dish 134. Presentation device 108(1) is also referred to as a set-top box or a satellite receiving device. Presentation device 108(1) is coupled to a television 136(1) for presenting the content received by the presentation device (e.g., audio data and video data), as well as a graphical viewer interface. A particular presentation device 108 can be coupled to any number of televisions 136 and/or similar devices that can be implemented to display or otherwise render content. Similarly, any number of presentation devices 108 can be coupled to a single television 136.

Presentation device 108(2) is also coupled to receive broadcast content from broadcast network 110 and provide the received content to associated television 136(2). Presentation device 108(N) is an example of a combination television 138 and integrated set-top box 140. In this example, the various components and functionality of the set-top box are incorporated into the television, rather than using two separate devices. The set-top box incorporated into the television may receive broadcast signals via a satellite dish (similar to satellite dish 134) and/or via broadcast network 110. In alternate implementations, presentation devices 108 may receive broadcast signals via the Internet or any other broadcast medium.

Each presentation device 108 runs an electronic program guide (EPG) application that utilizes the program data. This application may be an implementation of the exemplary EPG manager. An EPG application enables a television viewer to navigate through an onscreen program guide and locate television shows of interest to the viewer. With an EPG application, the television viewer can look at schedules of current and future programming, set reminders for upcoming programs, and/or enter instructions to record one or more television shows.

Presentation device 108 may access video from a removable storage medium 142, such as a DVD disk. Also, presentation device 108 may access video from a non-removable storage medium 144, such as an internal hard drive. The device provides the multimedia content from the storage media to an associated television. The device may extract program data from the storage media. Examples of such a presentation device include DVD player, a personal video recorder, etc.

Another example implementation of the presentation device 108 is a system known as WebTV®, manufactured by the Microsoft Corporation, Inc., which uses a conventional television screen or another display unit in combination with a networked computer for composing, sending and receiving e-mail, browsing the World Wide Web (Web), accessing other segments of the Internet, and otherwise displaying information. A WebTV® system uses standard telephone lines, Integrated Services Digital Network (ISDN) lines, cable lines associated with cable television service, or the like to connect to the Internet or other wide area networks.

The exemplary environment 100 also includes on-demand content provider 150, such as Video On-Demand (VoD) providers. It may provide stored on-demand content for viewing via a presentation device 108 through an onscreen movie guide, such as an EPG user interface.

### Exemplary Presentation Device

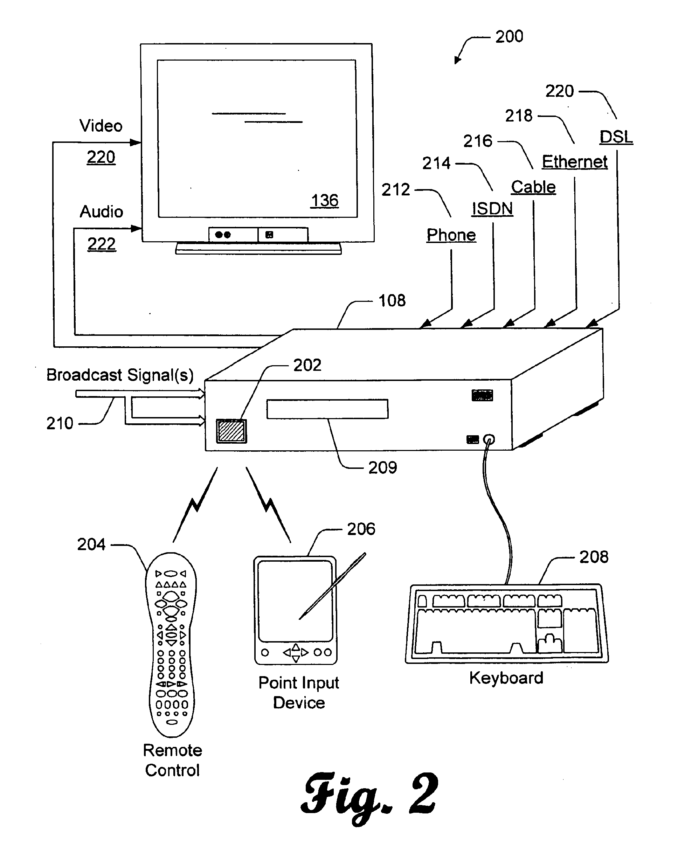

**Fig. 2** illustrates an exemplary implementation 200 of a presentation device 108 shown as a standalone unit that connects to a television 136. Presentation device 108 can be implemented in any number of embodiments, including as a set-top box, a satellite receiver, a TV recorder with a hard disk, a game console, an information appliance, a DVD player, personal video recorder, and so forth.

Presentation device 108 includes a wireless receiving port 202, such as an infrared (IR) or Bluetooth wireless port, for receiving wireless communications from a remote control device 204, a handheld input device 206, or any other wireless device, such as a wireless keyboard. Handheld input device 206 can be a personal digital assistant (PDA), handheld computer, wireless phone, or the like. Additionally, a wired keyboard 208 is coupled to communicate with the presentation device 108. In alternate embodiments, remote control device 204, handheld device 206, and/or keyboard 208 may use an RF communication link or other mode of transmission to communicate with presentation device 108.

Presentation device 108 may have a storage medium reader 209 for reading content storage media, such as DVD disks or a hard drive.

Presentation device 108 may receive one or more broadcast signals 210 from one or more broadcast sources, such as from a satellite or from a broadcast network. Presentation device 108 includes hardware and/or software for receiving and decoding broadcast signal 210, such as an NTSC, PAL, SECAM or other TV system video signal.

Presentation device 108 also includes hardware and/or software for providing the viewer with a graphical viewer interface by which the viewer can, for example, access various network services, configure the presentation device 108, and perform other functions.

Presentation device 108 may be capable of communicating with other devices via one or more connections including a conventional telephone link 212, an ISDN link 214, a cable link 216, an Ethernet link 218, a DSL link 220, and the like. Presentation device 108 may use any one or more of the various communication links 212-220 at a particular instant to communicate with any number of other devices.

Presentation device 108 generates video signal(s) 220 and audio signal(s) 222, both of which are communicated to television 136. The video signals and audio signals can be communicated from presentation device 108 to television 136 via an RF (radio frequency) link, S-video link, composite video link, component video link, or other communication link.

Although not shown in Fig. 2, presentation device 108 may include one or more lights or other indicators identifying the current status of the device. Additionally, the presentation device may include one or more control buttons, switches, or other selectable controls for controlling operation of the device.

**Fig. 3** illustrates selected components of presentation device 108 shown in Figs. 1 and 2. Presentation device 108 includes a first tuner 300 and an optional second tuner 302. These tuners may be called the receiving unit. The tuners 300 and 302 are representative of one or more in-band tuners that tune to various frequencies or channels to receive television signals, as well as an out-of-band tuner that tunes to the broadcast channel over which other content may be broadcast to presentation device 108.

Presentation device 108 also includes one or more processors 304 and one or more memory components. Examples of possible memory components include a random access memory (RAM) 306, a disk drive 308, a mass storage component 310, and a non-volatile memory 312 (e.g., ROM, Flash, EPROM, EEPROM, etc.).

Alternative implementations of presentation device 108 can include a range of processing and memory capabilities, and may include more or fewer types of memory components than those illustrated in Fig. 3.

Processor(s) 304 process various instructions to control the operation of presentation device 108 and to communicate with other electronic and computing devices. The memory components (e.g., RAM 306, disk drive 308, storage media 310, and non-volatile memory 312) store various information and/or data such as multimedia content, electronic program data, web content data, configuration information for presentation device 108, and/or graphical viewer interface information. The device may cache data into any one of these many memory components.

An operating system 314 and one or more application programs 316 may be stored in non-volatile memory 312 and executed on processor 304 to provide a runtime environment. A runtime environment facilitates extensibility of presentation device 108 by allowing various interfaces to be defined that, in turn, allow application programs 316 to interact with presentation device 108.

In the illustrated example, an EPG application 318 is stored in memory 312 to operate on the EPG data and generate a program guide. The application programs 316 that may be implemented on presentation device 108 can include, for example, a browser to browse the Web, an email program to facilitate electronic mail, and so on.

Presentation device 108 can also include other components pertaining to a television entertainment system which are not illustrated in this example for simplicity purposes. For instance, presentation device 108 can include a user interface application and user interface lights, buttons, controls, etc. to facilitate viewer interaction with the device.

Presentation device 108 also includes a decoder 320 to decode a broadcast video signal, such as an NTSC, PAL, SECAM or other TV system video signal. Presentation device 108 further includes a wireless interface 322, a network interface 324, a serial and/or parallel interface 326, and a modem 328. Wireless interface 322 allows presentation device 108 to receive input commands and other information from a user-operated input device, such as from a remote control device or from another IR, Bluetooth, or similar RF input device.

Network interface 324 and serial and/or parallel interface 326 allows presentation device 108 to interact and communicate with other electronic and computing devices via various communication links. Although not shown, presentation device 108 may also include other types of data communication interfaces to communicate with other devices. Modem 328 facilitates presentation device 108 communication with other electronic and computing devices via a conventional telephone line.

Presentation device 108 also includes an audio/video output 330 that provide signals to a television or other device that processes and/or presents or otherwise renders the audio and video data. This output may be called the display.

Presentation device 108 also includes additional components: an EPG manager 340 and EPG manager interface(s) 342. These components partially or wholly implement the exemplary EPG manager. These components may be application program or a hardware component.

The EPG manager 340 communicates with a EPG provider to obtain results for a query or current browsing. This may be directly to a remote EPG provider or via a local EPG provider.

Queries may include searches for keywords or categories. Also, queries may be generated when the viewer wants to find something "like" what they are currently viewing or have selected. This "like" search may be accomplished by comparing keywords and categories of other programming with the base one that others are to be "like."

The EPG manager 340 is valuable to the EPG application developers because it reduces the need to develop new modules for EPG browsing and queries. The EPG manager 340 is valuable to the viewer because each EPG search/browse is via a common EPG UI and covers all available EPG providers, including recently added ones.

The EPG manager 340 may expose an EPG manager interface(s) 342 (such as an application programming interface or API) that allows any application to acquire listing information. This includes an ability to search EPG program data.

One or more of the EPG manager interface(s) 342 or the application program(s) 316 may request and/or receive EPG data from an EPG provider (remote or local).

When an application requests EPG, the EPG manager query's multiple EPG providers where each EPG provider is responsible for some particular storage method or carriage. The EPG providers return the appropriate EPG program data. The EPG manager 340 organizes it and returns to the application. This allows the user to have a unified experience for searching and browsing content.

In this situation, the EPG providers are likely to be local EPG providers that communicate with remote EPG providers.

Although shown separately, some of the components of presentation device 108 may be implemented in an application specific integrated circuit (ASIC). Additionally, a system bus (not shown) typically connects the various components within presentation device 108.

A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

### EPG Manager Environment

**Fig. 4** illustrates an example suitable environment for the exemplary EPG manager where an Integrated Receiver/Decoders (IRD) device (such as presentation device 108) receives program data from multiple sources. As illustrated, these multiple sources are remote EPG providers.

As shown in Fig. 4, the presentation device 108 receives a broadcast signal from one or more broadcast sources. Examples of such sources include a cable television broadcaster 450, a local television broadcaster 430, a satellite television broadcaster 420, and a VoD provider 460.

The presentation device 108 sometimes receives signals (sometimes even broadcast signals) from other sources, such as the Internet communications (depicted by network 470), intranet communications (depicted by network 470), data storage devices (such as DVR storage 440), and directly connected devices (such as MP3 player 480).

Typically, each broadcast source provides a proprietary EPG for their programming. Sometimes, these broadcasters offer enhanced proprietary EPGs as a value-added service. From each of these sources, the presentation device 108 may receive program data for the programming offered from that source and/or from another source. In Fig. 4, examples of program data are illustrated by cable TV program data 452, local TV program data 432, a satellite television program data 422, and VoD program data 462.

Moreover, other sources (e.g., web pages and email) may offer an enhanced proprietary EPG as a premium service. Fig. 4 shows the network 470. It may provide its own program data and data for programming from other sources.

Furthermore, the presentation device 108 may receive program data (e.g., program data 442 for DVR storage in Fig. 4) from multimedia storage mediums (such as DVD or removable and non-removable storage mediums). Since content from such mediums is not transitory, its program data may indicate present availability.

Further still, the presentation device 108 may receive program data supplied by portable multimedia devices (such as MP3 player 480).

With conventional approaches, a viewer must browse (or search) each EPG separately. For example, if a viewer wanted to find programming on the subject of "cats", she would have to search each EPG listing separately.

However, with the exemplary EPG manager, the viewer is freed from this repetitive and confusing task. Instead, with the exemplary EPG manager, a viewer searches/browses a common UI of the aggregate of the various and several EPG listings.

Fig. 4 shows an example of an aggregate EPG UI 410 on TV 136 that the exemplary EPG manager may generate. The TV 136 is connected to the presentation device 108. The aggregate EPG UI 410 illustrates programming listings from multiple sources.

Specifically, it lists cable TV program data 454, local TV program data 434, a satellite television program data 424, VoD program data 464, and DVR program data 444. This data is acquired from the corresponding program data (452, 432, 422, 462, 442) supplied by the broadcaster/devices.

In addition to aggregating the program data for purposes of display to a user, the exemplary EPG manager has other applications. Since the aggregated data is returned through an API, there are many other uses for the data. For example, a programmable recorder may automatically select and record programming that a user is expected to like based upon the retrieved program data, knowledge of the user's tastes, and a set of heuristics.

### Portable Multimedia Storage

A removable drive―such as a Firewire-connected (i.e., IEEE 1394) storage medium―may be connected to a presentation device 108. The drive has multimedia is stored on it and program data associated therewith such content. When the removable drive is plugged in to the device, it detects and substantiates the drive. The exemplary EPG manager is notified and loads the EPG provider from the drive and/or loads the EPG data from the drive.

Consequently, the exemplary EPG manager may automatically catalog the multimedia content on the removable drive when it is plugged into the device. The cataloging is based upon the loaded EPG provider and/or EPG data from the drive.

### Prioritization

When the exemplary EPG manager aggregates program data from multiple EPG sources, it may encounter more than one listing for the same program (from the same source). For example, there may be a basic listing from one EPG data source and enhanced listing from the same program from another. When there is a conflict, one may have a stated priority.

Alternatively, the viewer can specify which provider has priority. Also, the viewer could specify who has priority for specific parts of the listing (e.g., title, description, rating, etc.).

### Exemplary EPG Manager APIs

Local EPG providers (e.g. 344 of Fig. 3) are local program modules specifically for communicating with one or more specific remote sources of EPG data (i.e., "remote EPG providers").

Fig. 5 shows a functional illustration of software components of a typical IRD having the exemplary EPG manager therein.

The IRD includes one or more EPG applications 510 and a centralized EPG manager program module 340. Between the applications and centralized manager is an API set generically called "EPG_CONTROL_API".

The IRD includes one or more local EPG providers (e.g., APIs) 344a, 344b, and 344c. Local EPG provider 344a retrieves EPG data from a local broadcaster 530. Local EPG provider 344b retrieves EPG data from a DVD disk (which may be viewed at a "remote" EPG provider). Another example of a local EPG provider is a DVR. Local EPG provider 344c retrieves EPG data from a VoD broadcaster 560.

Between the centralized EPG manager 340 and the local providers are one or more APIs generically called "EPG_PROV_API.".

### EPG CONTROL API

The following is an example of EPG_CONTROL_API specifications called "IEPGControl." It may be employed in the exemplary EPG manager.

The **IEPGControl** interface provides applications with easy access to EPG data without requiring them to directly access an underlying database schema or raw data stream.

### EPG PROV API

The following is an example of EPG_PROV_API specifications called "IEPGProviderXP." It may be employed in the exemplary EPG manager.

The **IEPGProviderXP** interface defines dynamic EPG provider functionality. This interface is scriptable.

### Methodological Implementation of the Exemplary E-Commerce Facilitation

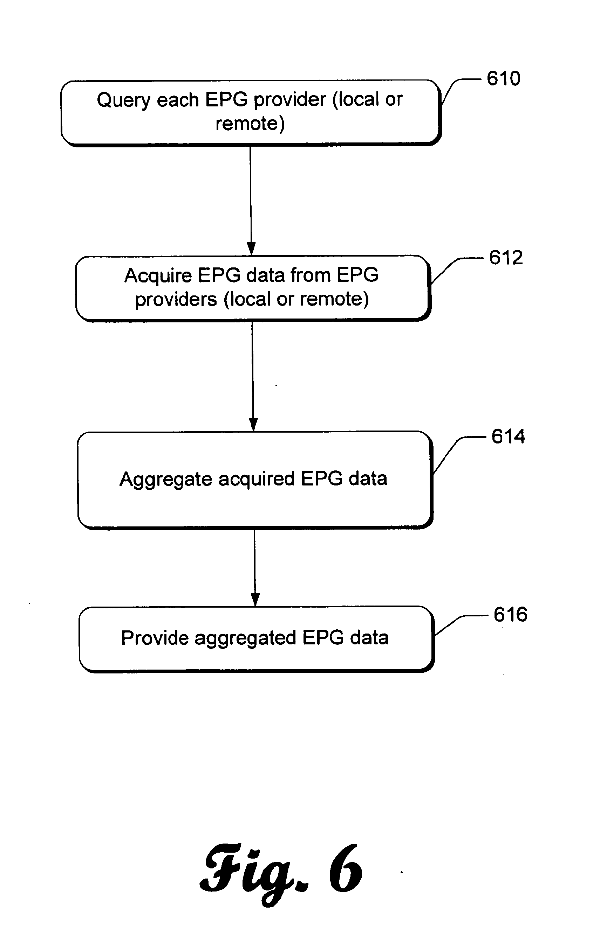

**Fig. 6** shows a methodological implementation of the exemplary EPG manager. This methodological implementation may be performed in software, hardware, or a combination thereof.

At 610, it queries multiple sources (i.e., EPG data sources) based upon the query request or browse criteria.

At 612 of Fig. 6, the exemplary EPG manager acquires EPG data from each EPG data source. Examples of such sources are described herein.

At 614, the exemplary EPG manager aggregates the acquired EPG data.

At 616, the exemplary EPG manager provides the results to an application. That application may display it and in a common user-interface (UI) for display of the aggregated EPG data..

Alternatively, the results may be presented to another application for processing. For example, a programmable recorder may automatically select and record programming that a user is expected to like based upon the retrieved program data, knowledge of the user's tastes, and a set of heuristics.

### Computer-Executable Instructions

An implementation of an exemplary EPG manager may be described in the general context of computer-executable instructions, such as program modules, executed by one or more computers or other devices. Generally, program modules include routines, programs, objects, components, data structures, etc. that performs particular tasks or implement particular abstract data types. Typically, the functionality of the program modules may be combined or distributed as desired in various embodiments.

### Computer Readable Media

An implementation of an exemplary EPG manager may be stored on or transmitted across some form of computer readable media. Computer readable media may be any available media that may be accessed by a computer. By way of example, and not limitation, computer readable media may comprise "computer storage media" and "communications media."

"Computer storage media" include volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

"Communication media" typically embodies computer readable instructions, data structures, program modules, or other data in a modulated data signal, such as carrier wave or other transport mechanism. Communication media also includes any information delivery media.

The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

### Conclusion

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. In a multimedia presentation system, a computer-readable medium having computer-executable instructions that, when executed by the system, performs a method comprising:
obtaining program data from multiple electronic program guide (EPG) providers;
aggregating the obtained program data;
providing the aggregated program data.

2. A medium as recited in claim 1, wherein the providing comprises presenting the aggregated program data for display.

3. A medium as recited in claim 1, wherein the providing comprises sending the aggregated program data to a program module.

4. A medium as recited in claim 1, wherein the multiple EPG providers includes local EPG providers, remote EPG providers, or both.

5. A medium as recited in claim 1, wherein the multiple EPG providers comprises local EPG providers configured to communicate with remote EPG providers.

6. A medium as recited in claim 1, wherein the multiple EPG providers are selected from a group consisting of:
• a local television broadcaster;
• a cable television broadcaster;
• satellite television broadcaster;
• a VoD service provider;
• a Web page;
• an Internet instant message;
• an Internet transmission;
• a non-removable storage medium;
• a removable storage medium;
• digital video recorder;
• a smart card; and
• a portable multimedia device.

7. A medium as recited in claim 1, wherein the obtaining comprises acquiring program data from the multiple EPG providers via one or more data communication media, which are selected from a group consisting of:
• in-band data of a broadcast;
• out-of-band data;
• a web page;
• an e-mail message;
• an instant message;
• an Internet transmission;
• a string of plain text;
• a smart card;
• a removable storage medium; and
• a non-removable storage medium.

8. A medium as recited in claim 1, wherein the method further comprises querying one or more of the multiple EPG providers to obtain program data therefrom.

9. A medium as recited in claim 1, wherein the medium comprises one or more application programming interfaces (APIs).

10. A medium as recited in claim 1, wherein the providing further comprises searching the aggregated program data.

11. A medium as recited in claim 1, wherein the providing comprises concurrently displaying program data from more than one EPG provider.

12. A presentation device comprising:
an audio/visual output;
a medium as recited in claim 1.

13. In a multimedia presentation system, a computer-readable medium having computer-executable instructions that, when executed by the system, performs a method comprising:
obtaining program data from multiple electronic program guide (EPG) providers;
aggregating the obtained program data.

14. A medium as recited in claim 13, wherein the method further comprises searching the aggregated program data.

15. A medium as recited in claim 13, wherein the method further comprises providing the aggregated program data.

16. A medium as recited in claim 13, wherein the method further comprises presenting the aggregated program data for display.

17. A medium as recited in claim 13, wherein the method further comprises sending the aggregated program data to a program module.

18. A medium as recited in claim 13, wherein the multiple EPG providers includes local EPG providers, remote EPG providers, or both.

19. A medium as recited in claim 13, wherein the multiple EPG providers comprises local EPG providers configured to communicate with remote EPG providers.

20. A medium as recited in claim 13, wherein the multiple EPG providers are selected from a group consisting of:
• a local television broadcaster;
• a cable television broadcaster;
• satellite television broadcaster;
• a VoD service provider;
• a Web page;
• an Internet instant message;
• an Internet transmission;
• a non-removable storage medium;
• a removable storage medium;
• digital video recorder;
• a smart card; and
• a portable multimedia device.

21. A medium as recited in claim 13, wherein the obtaining comprises acquiring program data from the multiple EPG providers via one or more data communication media, which are selected from a group consisting of:
• in-band data of a broadcast;
• out-of-band data;
• a web page;
• an e-mail message;
• an instant message;
• an Internet transmission;
• a string of plain text;
• a smart card;
• a removable storage medium;
• digital video recorder; and
• a non-removable storage medium.

22. A medium as recited in claim 13, wherein the method further comprises querying one or more of the multiple EPG providers to obtain program data therefrom.

23. A medium as recited in claim 13, wherein the medium comprises one or more application programming interfaces (APIs).

24. A medium as recited in claim 13, wherein the method further comprise concurrently displaying program data from more than one EPG provider.

25. A medium as recited in claim 13, wherein the method further comprise providing the aggregated program data to a module of the multimedia presentation system.

26. A presentation device comprising:
an audio/visual output;
a medium as recited in claim 13.

27. In a multimedia presentation system, a method comprising:
obtaining program data from multiple electronic program guide (EPG) providers;
aggregating the obtained program data.

28. A method as recited in claim 27 further comprising presenting the aggregated program data.

29. A method as recited in claim 27 further comprising searching the aggregated program data.

30. A method as recited in claim 27 further comprising providing the aggregated program data.

31. A method as recited in claim 27 further comprising presenting the aggregated program data for display.

32. A method as recited in claim 27 further comprising sending the aggregated program data to a program module.

33. A method as recited in claim 27, wherein the multiple EPG providers includes local EPG providers, remote EPG providers, or both.

34. A method as recited in claim 27, wherein the multiple EPG providers comprises local EPG providers configured to communicate with remote EPG providers.

35. A method as recited in claim 27, wherein the multiple EPG providers are selected from a group consisting of:
• a local television broadcaster;
• a cable television broadcaster;
• satellite television broadcaster;
• a VoD service provider;
• a Web page;
• an Internet instant message;
• an Internet transmission;
• a non-removable storage medium;
• a removable storage medium;
• digital video recorder;
• a smart card; and
• a portable multimedia device.

36. A method as recited in claim 27, wherein the obtaining comprises acquiring program data from the multiple EPG providers via one or more data communication media, which are selected from a group consisting of:
• in-band data of a broadcast;
• out-of-band data;
• a web page;
• an e-mail message;
• an instant message;
• an Internet transmission;
• a string of plain text;
• a smart card;
• a removable storage medium;
• digital video recorder; and
• a non-removable storage medium.

37. A method as recited in claim 27, wherein the method further comprises querying one or more of the multiple EPG providers to obtain program data therefrom.

38. A method as recited in claim 27, wherein the medium comprises one or more application programming interfaces (APIs).

39. A method as recited in claim 27 further comprising concurrently displaying program data from more than one EPG provider.

40. A method as recited in claim 27 further comprising providing the aggregated program data to a module of the multimedia presentation system.

41. A presentation device comprising:
one or more electronic program guide (EPG) provider interfaces configured to obtain program data from multiple EPG providers;
an EPG manager component configured to aggregate the obtained program data.

42. A presentation device as recited in claim 41, wherein the EPG manager component is further configured to display the aggregated program data.

43. A presentation device as recited in claim 41, wherein the EPG manager component is further configured to present an EPG user-interface (UI) having program data from multiple EPG providers.

44. A presentation device as recited in claim 41, wherein the EPG manager component is further configured to provide the aggregated program data from multiple EPG providers to another component of the presentation device.

45. A presentation device as recited in claim 41, wherein the multiple EPG providers are selected from a group consisting of:
• a local television broadcaster;
• a cable television broadcaster;
• satellite television broadcaster;
• a VoD service provider;
• a Web page;
• an Internet instant message;
• an Internet transmission;
• a non-removable storage medium;
• a removable storage medium;
• digital video recorder;
• a smart card; and
• a portable multimedia device.

46. A presentation device as recited in claim 41, wherein the one or more EPG provider interfaces are further configured to acquire program data from the multiple EPG providers via one or more data communication media, which are selected from a group consisting of:
• in-band data of a broadcast;
• out-of-band data;
• a web page;
• an e-mail message;
• an instant message;
• an Internet transmission;
• a string of plain text;
• a smart card;
• a removable storage medium;
• digital video recorder; and
• a non-removable storage medium.

47. A presentation device as recited in claim 41, wherein the EPG manager component is configured to query one or more of the multiple EPG providers to obtain program data therefrom.

48. A presentation device as recited in claim 41, wherein the one or more EPG provider interfaces comprise one or more application programming interfaces (APIs).

49. A presentation device as recited in claim 41, wherein the EPG manager components comprises one or more application programming interfaces (APIs).

50. A computer-readable medium having stored thereon a data structure comprising an aggregate of program data from multiple EPG providers.
